(19) Europäisches Patentamt

European Patent Office

Office européen des brevets

(11) EP 0 897 155 A1

(12) EUROPÄISCHE PATENTANMELDUNG

(43) Veröffentlichungstag:
17.02.1999 Patentblatt 1999/07

(51) Int. Cl.⁶: G06F 15/80

(21) Anmeldenummer: 98111786.4

(22) Anmeldetag: 26.06.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 13.08.1997 DE 19734947

(71) Anmelder: ABB PATENT GmbH
68309 Mannheim (DE)

(72) Erfinder: Otte, Ralf, Dipl.-Ing.
69469 Weinheim (DE)

(74) Vertreter:
Rupprecht, Klaus, Dipl.-Ing. et al
c/o ABB Patent GmbH,
Postfach 10 03 51
68128 Mannheim (DE)

(54) **Verfahren zur Steuerung von Prozessvorgängen**

(57) Die Erfindung bezieht sich auf ein Verfahren zur Steuerung von Prozeßvorgängen einer technischen Anlage. Um eine gleichzeitige und zusammenhängende Bewertung relevanter Prozeßgrößen der Anlage zu ermöglichen, wird vorgeschlagen, die relevanten Prozeßgrößen durch eine neuronale Analyse auf der Grundlage selbstorganisierender neuronaler Karten in Beziehung zueinander auszuwerten, indem eine topologieerhaltende, nichtlineare Projektion von Daten der relevanten Prozeßgrößen auf eine mehrdimensionale neuronale Karte realisiert wird.

Fig. 1

**Beschreibung**

Die Erfindung bezieht sich auf ein Verfahren zur Steuerung von Prozeßvorgängen einer technischen Anlage.

Das Verfahren ist geeignet zur Optimierung und Analyse von Prozeßvorgängen einer Kraftwerksanlage.

Es ist allgemein bekannt, einzelne Prozeßgrößen meßtechnisch zu erfassen, zu betrachten und auch prozeßzustandsabhängig auszuwerten. Weiterhin ist bekannt, einzelne Prozeßgrößen durch Anwendung mathematischer, statistischer oder neuronaler Algortihmen zu modellieren und vorherzusagen. Ein Nachteil dieser signalgestützten Verfahren ist, daß in Bereichen, in denen eine Vielzahl von Prozeßsignalen beobachtet werden, die Interpretierbarkeit und Übersichtlichkeit -und damit das aktuelle Wissen über den Prozeßzustand- verloren geht. Gerade bei transienten Prozeßvorgängen bei denen sich gleichzeitig Hunderte von Prozeßgrößen verändern, kann keine Einschätzung des aktuellen Prozeßzustandes gegeben werden, und insbesondere ist es nicht möglich, den Verlauf des transienten Prozeßvorganges zu bewerten. Ein weiterer Nachteil herkömmlicher Methoden ist, daß bei nichtlinearen Zusammenhängen der Prozeßgrößen keine Aussage darüber getroffen werden können, welche Prozeßgrößen um wieviel Prozent gleichzeitig geändert werden müssen, damit der aktuelle Prozeßzustand in einen gewünschten Prozeßzustand überführt werden kann. Gegenwärtig wird dieses Problem dadurch gelöst, daß für vorher fest definierte stationäre Arbeitsbereiche eine what-if-Simulation durchgeführt wird, bei der der Einfluß jeder einzelnen Prozeßgröße auf die gewünschte Zielgröße ermittelt wird. Dabei können ein oder mehrere Eingangssignale geändert und das resultierende Verhalten der Zielgröße berechnet werden. Ein Nachteil dieses Verfahrens ist, daß der Anwender nur durch langwieriges Probieren herausbekommt, welche Prozeßgrößen auf welchen Wert gestellt werden müssen, um den Prozeß in eine geforderte oder gewünschte Richtung zu fahren. Weiterhin fehlt gerade in den transienten Prozeßbereichen eine Aussage, was eigentlich als gewünschter Vorgang angesehen werden kann. Einer Kombination von z.B. 200 Meßsignalen ist nicht ohne weiteres anzusehen, ob sie einen optimalen oder einen fehlerhaften Prozeßzustand repräsentiert.

Der Erfindung liegt die Aufgabe zugrunde, ein Verfahren anzugeben, das eine gleichzeitige und zusammenhängende Bewertung und Anzeige relevanter Prozeßgrößen einer technischen Anlage ermöglicht, dabei für jeden beliebigen Betriebspunkt und Zeitpunkt der Anlage eine Aussage über die zugrundeliegenden Einflußgrößen macht, und die Prozeßgrößenänderungen vorgibt, die notwendig sind um vom aktuellen Zustand in einen gewünschten Betriebszustand zu kommen. Außerdem soll eine Unterscheidung zwischen optimalem und nicht-optimalem Prozeßzustand durch eine Visualisierungsmethode möglich sein.

Diese Aufgabe wird gelöst durch ein im Anspruch 1 angegebenes Verfahren zur Steuerung von Prozeßvorgängen einer technischen Anlage, bei dem alle für einen Prozeß relevanten Größen zusammengefaßt und durch eine neuronale Analyse auf Grundlage selbstorganisierender Karten (Self-Organizing-Map, sog. SOM) in Beziehung zueinander ausgewertet werden, indem eine topologieerhaltende, nichtlineare Projektion von Daten der relevanten Prozeßgrößen auf eine mehrdimensionale, neuronale Karte (SOM) realisiert wird.

Auf dieser SOM wird der aktuelle Prozeßzustand dargestellt und somit im Kontext anderer Prozeßzustände vergleichbar. Ist der aktuelle Prozeßzustand von einem gewünschten Prozeßzustand entfernt, kann die notwendige Prozeßgrößenkombination ausgegeben werden, um vom aktuellen zum gewüschten Prozeßzustand zu gelangen.

Vorteilhafte Ausgestaltungen sind in weiteren Ansprüchen angegeben. Durch den ganzheitlichen Ansatz werden nicht nur die Werte der einzelnen Prozeßgrößen, sondern auch insbesondere ihre gegenseitigen Einflüsse untereinander berücksichtigt.

In der neuronalen Theorie versteht man unter einer selbstorganisierenden Karte (Self-Organizing-Map, SOM) ein "selbstorganisierendes neuronales Netz", bei dem alle Neuronen nebeneinander angeordnet sind. Das selbstorganisierende neuronale Netz ist ein eingeführter Begriff für eine spezielle Klasse von neuronalen Netzen, die sich anhand von Eingangssignalen selbst strukturieren, vgl. A. Zell „Simulation Neuronaler Netze", Addison-Wesley Verlag, 1994, Seite 179 bis 187. Im Unterschied zu herkömmlichen neuronalen Netzen, spielt die räumliche Lage der einzelnen Neuronen und ihre Nachbarschaftsbeziehungen bei den SOMs eine wichtige Rolle.

In der Systemtheorie wird als Zustandsraum einer Anlage der n-dimensionale Vektorraum bezeichnet, in dem die Prozeßdaten übereinander aufgetragen werden können. Zum Beispiel entspricht ein Datenbeispiel, d.h. ein Vektor mit den Werten der n Prozeßgrößen, zu einem Zeitpunkt $t_0$ einem Punkt in diesem Zustandsraum. Nachstehend wird unter einem Eingangsraum genau dieser Zustandsraum verstanden. Der Ausgangsraum ist der 2-dimensionale Raum, der auf der Karte abgebildet wird.

Mit Hilfe der SOMs lassen sich sogenannte topologieerhaltende Abbildungen realisieren. Topologieerhaltend bedeutet in diesem Zusammenhang, daß die Punkte (Datenpunkte), die im Eingangsraum nahe beieinander liegen, auch im Ausgangsraum, also auf der Karte, nahe beieinander liegen werden. Damit stellt die Karte im Prinzip ein topologieerhaltendes, 2-dimensionales Fenster in den n-dimensionalen Zustandsraum der Anlage dar. Dabei bezeichnet n die Anzahl der Prozeßgrößen. Allerdings müssen Prozeßwerte zu den einzelnen Prozeßgrößen vorliegen, da das Verfahren nur auf der Grundlage von Daten arbeiten kann.

Beim erfindungsgemäßen Verfahren werden nach einer entsprechenden Datenvorverarbeitung einem selbstorganisierenden Netz in einer Lernphase die Werte relevanter Prozeßgrößen angeboten. Die Zahl n liegt zwischen 2 und mehreren hundert. Die notwendige Anzahl der Datenbeispiele beeinflußt das Ergebnis, sie sollte relativ groß sein, z.B. Anzahl der Datenbeispiele = 30 * n. Die Datenbeispiele repräsentieren bestimmte Prozeßzustände, die zu bestimmten Zeiten aufgenommen werden. Beispielsweise können die Daten in Form einer Matrix vorliegen, wobei die Spalten den Prozeßgrößen und die Zeilen den Datenbeispielen zu den jeweiligen Zeitpunkten entsprechen.

Die Lernphase erfolgt in zwei Schritten: Zuerst entfaltet sich die Karte im Zustandsraum der Anlage, danach werden die Anlagenzustände durch Anwendung eines mathematischen Verfahrens visualisiert. Bevor das Lernverfahren angewendet wird, werden die Prozeßdaten vorverarbeitet. Zuerst werden die einzelnen Prozeßgrößen auf einen vorgegebenen Wert skaliert und danach z.B. noch verrauscht. Das Verrauschen erlaubt das weitere Verarbeiten von verallgemeinerten Prozeßvorgängen, da dadurch nicht mehr einzelne willkürlich ausgewählte Vorgänge, sondern Prototypen von Vorgängen weiterverarbeitet werden.

Die **Entfaltung** der selbstorganisierenden Karte im Zustandsraum der Anlage wird durch selbstorganisierende Algorithmen basierend auf dem "neuronalen Algorithmus nach T. Kohonen" realisiert. Der selbstorganisierende neuronale Algorithmus wurde von Kohonen im Jahr 1982 eingeführt; vgl. T. Kohonen, „Self-organized formation of topologically correct feature maps" in Biological Cybernetics, 43, 59-69, 1982. Da Daten von Prozeßvorgängen nicht immer in verschiedene Datencluster aufgeteilt sein müssen, sondern z.B. auch als diskrete Prozeßtrajektorie (Linie) in einem hochdimensionalen Raum auftreten können, muß der neuronale Algorithmus und die Visualisierung entsprechend angepaßt werden. Ein Prozeßpunkt entsteht dann, wenn man die n Prozeßgrößen einer Anlage zu einem n-dimensionalen Vektor

$$pv = (pv_1, pv_2, ....., pv_i, ..... pv_n) \qquad\qquad (1)$$

zu einem Zeitpunkt $t_0$ zusammenfaßt; mit $pv_i$ ist die i-te Komponente des Eingangsvektors bezeichnet. Auf diese Weise lassen sich zu jedem Zeitpunkt $t_m$ Prozeßvektoren erzeugen und in einem n-dimensionalen Koordinatensystem als Punktwolke darstellen, dadurch entsteht eine Prozeßtrajektorie.

Sind die Vektoren pv, d.h. die Datenpunkte zu allen Zeiten des Prozeßabaufs relativ nahe beieinander und ist die fraktale Dimensionalität (FD) dieses Gebildes nahe bei 1, kann das Gebilde als Prozeßtrajektorie aufgefaßt werden. Fraktale Dimensionalität ist ein eingeführter Begriff für Gebilde in n-dimensionalen Räumen. Z.B. hat eine Linie die FD gleich 1, eine Fläche die FD gleich 2, ein Körper die FD gleich 3. Dazwischen gibt es Gebilde mit gebrochenzahligen FD, siehe B. Mandelbrot, „The Fractal Geometry of Nature", New York, Freeman, 1977 und J. Gleick, „ Chaos-die Ordnung der Natur", Knaur Verlag, 1990, Seiten 147-150.

Der o.g. neuronale Algorithmus kann sich auf jedem n-dimensionalen Gebilde (z.B. Kurve, Fläche oder Körper) selbstorganisieren. Dabei werden durch einen iterativen neuronalen Algorithmus die Gewichtsvektoren w aller Neuronen k auf der Karte an die Eingangsvektoren pv der Prozeßdaten unter Berücksichtigung der Nachbarschaftsbeziehungen der Neuronen angepaßt. Für die Vektoren w wird folgende Definition eingeführt:

$$w = (w_1, w_2, ....., w_i, ...... w_n), \qquad\qquad (2)$$

wobei mit $w_i$ die i-te Komponente des Gewichtsvektors eines Neurons bezeichnet ist.

Allerdings läßt sich nur durch eine Modifikation des SOM-Verfahrens eine anwendbare Visualisierung der Prozeßdaten realisieren. Folgende Modifizierung und Parametrisierung wird eingeführt:

Erstens werden zwei gegenüberliegende Eckneuronen auf der SOM auf den Anfang bzw. das Ende der Prozeßtrajektorie gezogen und dort mathematisch fixiert, indem die Gewichtsvektoren dieser Eckneuronen mit den gegebenenfalls skalierten Prozeßvektoren am Beginn und am Ende des Vorganges gleichgesetzt werden.

Zweitens, da der neuronale Algorithmus nach T. Kohonen nach einer unendlich langen Iterationsanzahl alle oder fast alle Neuronen auf die Prozeßtrajektorie ziehen kann, muß die Selbstorganisation rechtzeitig abgebrochen werden. Der Abbruch erfolgt so, daß ca. die Hälfte aller Neuronen auf der Trajektorie und die andere Hälfte um die Trajektorie gruppiert sind. Eine heuristisch ermittelte Möglichkeit ist z.B., die Anzahl der SOM-Iterationen auf die Anzahl der SOM-Neuronen zu beschränken. Dieser rechtzeitige Abbruch hat den Vorteil, daß mit den so entstandenen Karten von einem Referenzverlauf abweichende Prozeßverläufe sehr gut dargestellt werden können.

Drittens wird die Nachbarschaftsordnung auf der SOM auf eine Distanznorm festgelegt, die von der fraktalen Dimensionalität FD der Eingangsdaten abhängt. Ist die FD der Eingangsdaten z.B. zwischen eins und zwei, was für dynamische, technische Prozesse oftmals der Fall ist, ist die beste Distanznorm die sog. Manhatten-Distanz, bei der jedes Neuron auf der Karte (mit Ausnahme aller Neuronen an den Rändern) genau 4 Nachbarn hat: einen NORD-Nachbarn, einen OST- Nachbarn, einen SÜD-Nachbarn und einen WEST- Nachbarn. Diese Ergebnisse lassen sich aus der neuronalen Gastheorie ableiten.

Die **Visualisierung** der physikalischen Anlagenzustände geschieht nach einem sog. dynamischen Visualisierungsverfahren. Bei diesem Verfahren werden der entfalteten Karte die Eingangsvektoren in zufälliger Reihenfolge nochmals angeboten und das aktuelle Gewinnerneuron nach einem "Winner-takes-all" Algorithmus ermittelt. Dieser Algorithmus besagt, daß das Neuron, dessen Gewichtsvektor dem Eingangsvektor am nächsten ist, gewinnt. Die Aussage "am nächsten" wird durch Berechnung eines vorher bestimmten Abstandsmaßes, z.B. dem euklidischen Abstand, berechnet. Der Winner-takes-all Algorithmus ist ein Verfahren, bei dem immer nur das Neuron aktiv ist, das eine gewisse Bedingung am besten erfüllt; alle anderen Neuronen des Netzes oder der Karte sind inaktiv (1 -aus-k Auswahl, mit k ist gleich Anzahl Neuronen auf der Karte). Diese besondere Bedingung ist hier ein minimales Abstandsmaß zwischen dem aktuellen Eingangsvektor und dem Gewichtsvektor der einzelnen Neuronen, siehe S. Hafner, „Neuronale Netze in der Automatisierungstechnik", Oldenbourg Verlag, 1994, insbesondere Seiten 17 bis 25.

Für das jeweilige Gewinnerneuron wird ein interner Zähler, die Gewinnerrate, um den Zahlenwert eins erhöht. Am Ende dieser dynamischen Visualisierung werden die Gewinnerraten der einzelnen Neuronen in Farbwerte umkodiert, dabei bedeutet ein hoher Zahlenwert z. B. eine helle Farbe. Das Neuron mit der höchsten Gewinnerrate wird z.B. weiß dargestellt. Neuronen mit entsprechend kleinen Raten werden z.B. dunkler visualisiert. Neuronen, die gar nicht gewonnen haben, erhalten z.B. eine schwarze Farbe auf der SOM. Durch diesen Algorithmus entsteht auf der SOM ein heller Kanal, sog. Referenzkanal, von möglichen und zulässigen Prozeßzuständen. Eine Erweiterung des "Winner-takes-all" Algorithmus wird durch Anwendung eines "Winner-takes-most" Algorithmus erreicht. Bei diesem Algorithmus wird nicht nur für den Gewinner, sondern auch für den j-ten, d.h. zweitnächsten, drittnächsten, viertnächsten,... Gewinner ein interner Zähler hochgezählt, eine Möglichkeit für das Neuron M ist z.B.

$$\text{Gewinnzähler}^{M} = 1 \, / \, j \; + \text{Gewinnzähler}^{M} \qquad\qquad (3)$$

mit M ist gleich Neuron M und j ist die Position des Neurons in einer Liste der jeweiligen SOM-Antworten auf einen angelegten Eingangsvektor vp. Für den "Winner-takes-all" Algorithmus würde nur für das tatsächliche Gewinnerneuron ($j_{max}$=1) der Zähler um eins erhöht werden. Für den "Winner-takes-most" Algorithmus kann der jeweilige maxiamle Wert für $j_{max}$ vorgegeben werden. Durch diese Maßnahme läßt sich die Breite des Referenzkanals und damit die Breite des Toleranzbandes für den Gut-Zustand des Prozesses auf der Karte einstellen.

In der **Anwendungsphase** der Karte können durch Aufbau und Entwicklung einer Trajektorie von Prozeßzuständen auf dieser Karte mittels eines "Winner-takes-Algorithmus" Aussagen über den aktuellen und zukünftigen Prozeßzustand getroffen werden. Eine Analyse der einzelnen Prozeßgrößenverteilungen auf der Karte erlaubt das Erkennen von neuartigen Prozeßzusammenhängen. Eine Rücktransformation der abstrakten Darstellung der Karte auf die einzelnen Prozeßgrößen erlaubt das Ermitteln von Ursachen für Prozeßabweichungen.

Eine weitere Beschreibung des Verfahrens erfolgt nachstehend anhand von in den Zeichnungsfiguren dargestellten Ausführungsbeispielen.

Es zeigen:

Fig. 1  ein Strukturbild, das die wesentlichen Komponenten eines Systems zur Durchführung des Verfahrens zeigt,
Fig. 2  eine neuronale Karte mit einem „eingebrannten" Kanal für erlaubte Referenzanfahrten, sog. Referenzkanal (weißer Kanal)
Fig. 3  einen Trajektorienverlauf beim Anfahren eines Kessels (graue Linie innerhalb des Referenzkanals),
Fig. 4  einen Prozeßlenker, mit dessen Hilfe der Anlagenprozeß durch den Kanal gefahren werden kann, und
Fig. 5  einen Trajektorienverlauf mit guten (1) und schlechten (2) Prozeßzuständen.

Die Beschreibung des Verfahrens ist im folgenden in verschiedene Verfahrensschritte gegliedert und durch die Zeichnungsfiguren beispielhaft erläutert.

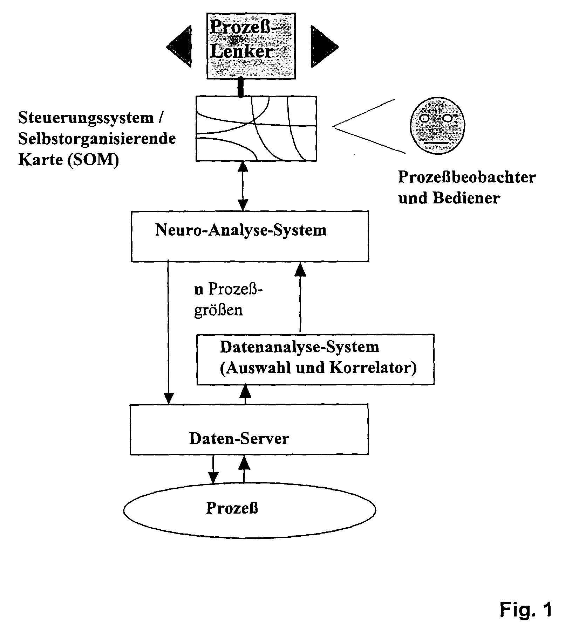

**Fig. 1** zeigt die Struktur eines Systems zur Durchführung des Verfahrens zur Prozeßanalyse und Diagnose mit neuronaler Karte.

Verfahrensschritt 1: Aufnahme und Auswahl der Prozeßgrößen

Aufnahme und Aufbereitung der Daten. Ein Datenerfassungs- und aufbereitungssystem, beispielsweise ein Datenserver basierend auf einem Rechner eines Leitsystems, erfaßt zyklisch Prozeßwerte aus einer technischen Anlage, beispielsweise von einem Kessel einer Kraftwerksanlage. Ein nachfolgendes Datenanalysesystem unterzieht die ausgewählten und relevanten Daten einer Korrelationsanalyse, um die unabhängigen, prozeßbeschreibenden Meßgrößen zu bestimmen. Danach werden die relevanten Meßgrößen skaliert und verrauscht.

Verfahrensschritt 2: Lernphase der Karte (off-line)

V2.1. Entfaltung des selbstorganisierenden, neuronalen Netzes im Zustandsraum der Anlage, basierend auf einem modifizierten Algorithmus nach T. Kohonen.

V2.2. Visualisierung des entfalteten Netzes als Karte durch Anwendung einer dynamischen Visualisierungsmethode basierend auf den jeweiligen Gewinnerraten der Neuronen.

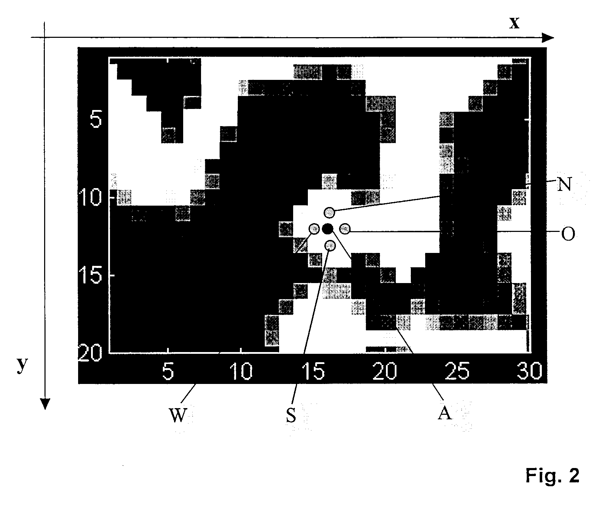

**Fig. 2** zeigt -hier in Schwarz/Weiß Darstellung- beispielhaft die strukturierte und farbkodierte, neuronale Karte für verschiedene gute Referenzanfahrten eines Kessels (heller zusammenhängender Kanal). Es stellt die Projektion und Visualisierung von mehreren Lastzuständen des Kessels auf einer neuronalen Karte mit 20*30 Neuronen dar. In Fig. 2 gibt die x-Achse die Anzahl der Neuronen in x-Richtung, die y-Achse die Anzahl der Neuronen in y-Richtung an. Dargestellt sind ein aktueller Prozeßzustand A und seine unmittelbar benachbarten Zustände N (Nord-Zustand), S (Süd-Zustand), W (West-Zustand) und O (Ost-Zustand).

Der helle Kanal, der Referenzkanal, gibt die erlaubten Prozeßzustände für einen normalen Kaltstart des Kessels vor. Die dunklen Gebiete auf der Karte bilden die Hülle zwischen den erlaubten Vorgängen, da sie Neuronen darstellen, die im Zustandsraum der Anlage um die Referenz-Prozeßtrajektorie gruppiert sind.

Durch Anwendung eines „Winner-takes-most"-Algorithmus läßt sich die Breite des Kanals und damit die Einstellung für eine spätere Fehlerdetektion steuern.

Obwohl in diesem Beispiel jeder Anlagenzustand durch 20 unabhängige Prozeßgrößen bestimmt wird und damit 20-dimensional ist, kann durch das Verfahren eine Projektion auf nur zwei Dimensionen (die SOM-Karte) durchgeführt werden; damit wird eine erheblich bessere Übersichtlichkeit über die tatsächlichen Prozeßzustände erreicht als bei der einzelnen Betrachtung aller 20 Prozeßgrößen. Die Anzahl der gleichzeitig ausgewerteten Prozeßgrößen ist nicht auf 20 beschränkt, sie kann wesentlich höher sein. Die Anzahl der Prozeßgrößen (20) hat a-priori nichts mit der Anzahl der Neuronen (20*30) zu tun. Die Anzahl der Neuronen sollte so groß wie möglich sein, sie wird nur durch die Rechenleistung des Analysecomputers beschränkt.

Verfahrensschritt 3: Anwendung - Prozeßanalyse mit der Karte (off-line / on-line)

V3.1. Anbindung der Karte an den Prozeß und Darstellung des aktuellen Prozeßzustandes auf der strukturierten Karte.

In der Anwendungsphase, d.h. während des Betriebes der Kraftwerksanlage, wird der aktuelle Prozeßzustand durch einen neuronalen "Winner-takes-all" Algorithmus ausgewertet und auf der vorher strukturierten und farbkodierten Karte aufgetragen. Damit kann der aktuelle, i.a. hochdimensionale Anlagenzustand im Kontext anderer Anlagenzustände visualisiert werden. Die räumliche Lage des aktuellen Prozeßzustandes im Referenzkanal gibt Auskunft über den aktuellen Zustand der Anlage, so ist z.B. Zutand A in Fig. 2 ein fehlerfreier Zustand, da er im weißen Referenzbereich liegt.

V3.2. Graphische Verbindung von Gewinnerneuronen

In der Anwendungsphase wird das jeweils aktuelle Gewinnerneuron zum Zeitpunkt $t_0$ z.B. durch einen schwarzen Kreis markiert. Verbindet man diese Gewinnerneuronen miteinander, entwickelt sich auf der strukturierten Karte mit der Zeit t ($t_0 < t_1 < t_2$) eine Trajektorie der aktuellen Prozeßzustände, die entweder ständig wächst oder bei fester vorgegebener Länge auf der Karte wandert (in Fig. 2 nicht dargestellt).

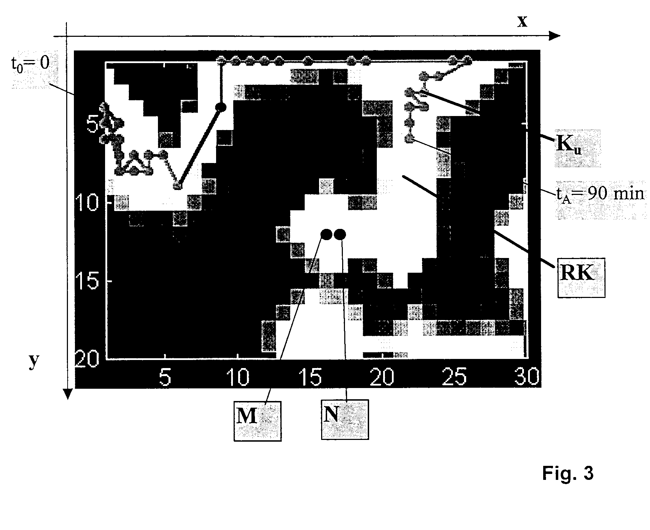

**Fig. 3** zeigt - hier in einer Schwarz/Weiß-Darstellung - beispielhaft einen solchen Trajektorienverlauf $K_u$ auf einer farbkodierten, neuronalen Karte mit 20*30 Neuronen beim Anfahren und Lastwechsel eines Kessels über einen Zeitraum von 90 Minuten. Die x-Achse in Fig. 3 gibt die Anzahl der Neuronen in x-Richtung, die y-Achse die Anzahl der Neuronen in y-Richtung an. Man sieht, daß der Anfahrvorgang genau in dem Referenzkanal RK läuft, d.h. der aktuell-laufende, hochkomplexe Vorgang $K_u$ -und nicht nur ein einzelner Prozeßzustand- kann auf einen Blick intuitiv richtig eingeordnet werden. Der Zeitpunkt $t_0$ ist der Startzeitpunkt für die Aufnahme, z.B. der Beginn des Kaltstarts. Der Zeitpunkt $T_A$ zeigt die Position des Prozeßzustandes nach 90 Minuten.

Verfahrensschritt 4: Anwendung - Modellanalyse mittels SOM

Um von der abstrakten Darstellung zurück zu den physikalischen Prozeß zu kommen, kann man verfahrensgemäß die Gewichtsverteilung der einzelnen Neuronen analysieren, da in den Gewichten die realen Werte der Prozeßgrößen kodiert sind. Das bedeutet, für jedes Neuron auf der Karte, lassen sich die dazugehörigen Prozeßwerte aller zugrundeliegenden Prozeßgrößen ermitteln. Ein Neuron auf der SOM entspricht demzufolge einem konkreten Zustand der Anlage. Der Unterschied zwischen zwei beliebigen Neuronen auf der Karte läßt sich demnach ermitteln, indem man die Gewichtsvektoren w dieser beiden Neuronen miteinander vergleicht. Da z.B. zwei Neuronen M und N zwei verschiedene Anlagenzustände M und N repräsentieren, bekommt man als Ergebnis einer Differenzanalyse die Differenzen für alle Prozeßgrößen heraus, die den Unterschied der Prozeßzustände M und N bewirken. Die folgende Gleichung verdeutlicht beispielhaft die Berechnung:

$$var_i = abs\ (w_{i,tM} - w_{i,tN}) * scal\_factor \qquad (4)$$

Die Differenz $var_i$ für Prozeßgröße $pv_i$ ergibt sich als absoluter Betrag abs der Differenz der entsprechenden Komponete $w_i$ im Zustand M und N multipliziert mit dem Skalierungsfaktor scal_factor. Ausgehend von dieser Differenz kann der auf den Meßbereich der Prozeßgrößen i bezogene prozentuale Unterschied $diff_i$ für jede Prozeßgröße $pv_i$ beider Anlagenzustände M und N ermittelt werden:

$$diff_i = var_i / (\text{Meßbereich von } pv_i) * 100\% \qquad (5)$$

Damit lassen sich die Einflüsse der einzelnen Prozeßgrößen $pv_i$ auf die beiden Prozeßzustände M und N berechnen und in einer geordneten Liste von Einflüssen der Prozeßgrößen darstellen. Dieses Verfahren realisiert damit eine Einflußanalyse aller Prozeßgrößen auf den Gesamtprozeß im ausgewählten Prozeßzustand M, denn mit o.g. Verfahren kann man für jeden aktuellen Prozeßzustand bzw. sein repräsentierendes Neuron M und einen jeweiligen benachbarten Zustand bzw. benachbartes Neuron N die Unterschiede gegenüber zugrundeliegenden Prozeßgrößen ermitteln. Diese Analyse läßt sich ausweiten, wenn man zur Einflußanalyse einen gewählten Prozeßzustand M oder A und all seine Nachbarzustände N, O, S, W (in Fig. 2) nehmen würde.

Da diese Einflußanalyse für jeden beliebigen Prozeßzustand M, d.h. für jeden Arbeitspunkt der Anlage, neu berechnet werden kann, stellt sie eine Erweiterung gegenwärtiger Verfahren zur Prozeßanalyse dar.

Verfahrensschritt 4: Anwendung - on-line Optimierung des Prozesses mittels SOM

Aufbauend auf den Verfahrensschritten 1, 2 und 3 kann - alternativ zum vorstehend beschriebenen Schritt 4 - eine on-line Optimierung des Prozesses realisiert werden, denn es ist möglich, für jeden Punkt auf der Karte -und damit für jeden Prozeßzustand-eine Prozeßgrößenkombination vorzugeben, um den Prozeß in die gewünschte Richtung zu fahren. Gewünschte Richtung bedeutet in diesem Zusammenhang, daß der Prozeß auf der Karte ausgehend vom aktuellen Gewinnerneuron zum Beispiel in Richtung NORD, OST, SÜD oder WEST gefahren werden soll (vgl. Fig. 2).

Dies ist deshalb möglich, wie oben erwähnt, weil in den Gewichten des jeweiligen Gewinnerneurons und seinen Nord-, Ost-, Süd- und Westnachbarn auf der Karte eine eindeutige Prozeßgrößenkombination zugeordnet werden kann. Ausgehend von dieser Zuordnung läßt sich damit diejenige Prozeßgrößenänderung vorgeben, die notwendig ist, um den Prozeß in die SOLL-Richtung zu fahren. Auf diese Weise kann der Anlagenprozeß Schritt für Schritt in den Referenzkanal zurückgebracht werden.

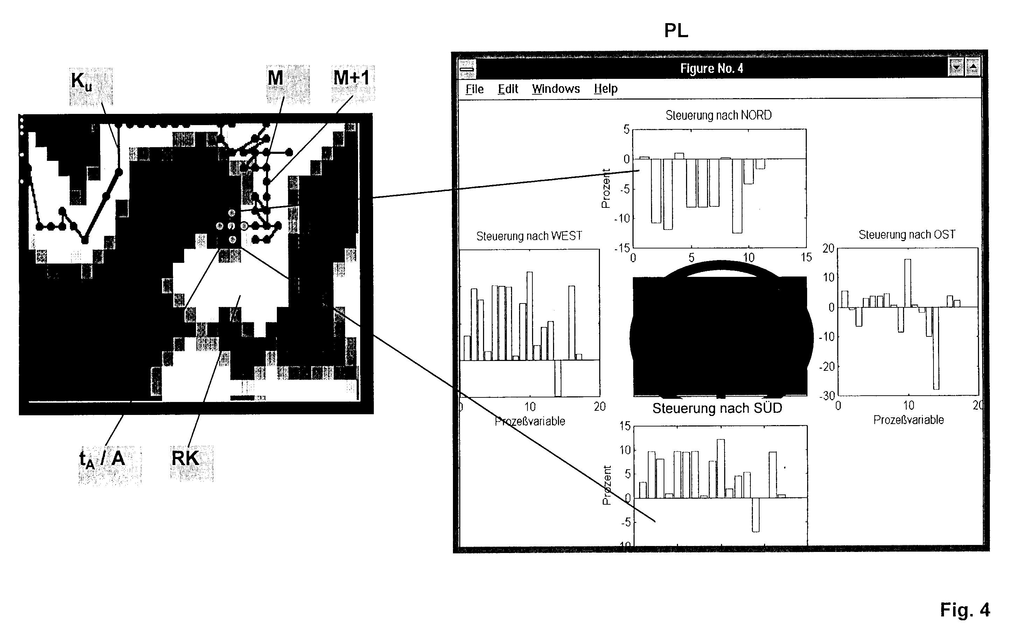

**Fig. 4** zeigt das an einem Beispiel. Der Prozeßvorgang, dargestellt als Trajektorie $K_u$ ist zu einem Zeitpunkt $t_A$ außerhalb des Referenzkanals RK gelangt, und hat den Zustand A. Durch Aufschaltung eines Prozeßlenkers PL, kann er zurück in den Referenzkanal gebracht werden, indem man die gewünschte Richtung vorgibt. Im Beipiel wäre der Prozeß auf der Karte in Richtung OST zu fahren, da dies der kürzeste Weg zurück in den Kanal ist. Ein Prozeßlenker ist ein Softwaretool, das auf der SOM-Karte operiert und für jedes Neuron der Karte die notwendigen Prozeßgrößenänderungen vorgibt, um zu den benachbarten Neuronen und damit zu benachbarten Prozeßzuständen zu gelangen. Dabei kann der Prozeßlenker zwischen Stellgrößen und Meßgrößen unterscheiden, da dies aus den Signaltypen abgeleitet werden kann. Dadurch ist es z.B. möglich, nur für die Stellgößen die notwendigen Wertänderungen vorzugeben.

Die in Fig. 4 dargestellten Prozeßzustände M und M+1 stellen zwei beliebige, zeitlich aufeinanderfolgende Zustände dar, die auf der Karte miteinander verbunden sind.

Verfahrensschritt 5: Automatisches Erkennen von Prozeßabweichungen

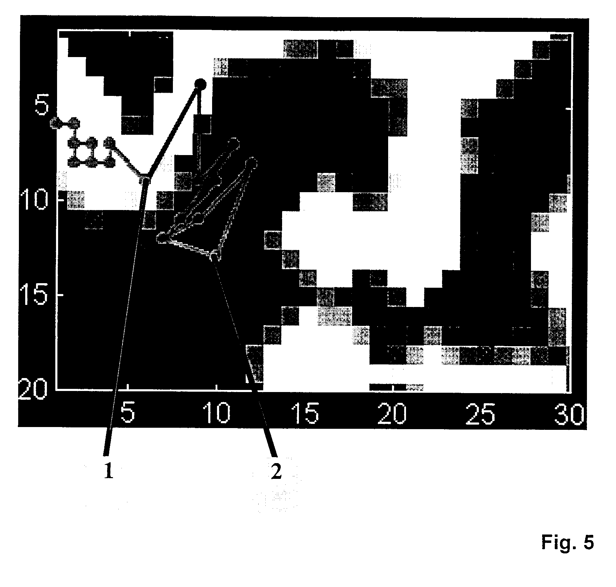

Gemäß vorstehend beschriebenem Vorgehen wird die Abweichung des Prozeßvorganges aus dem Referenzkanal nur visuell ermittelt. Es ist aber auch möglich, diese Fehlererkennung zu automatisieren, indem für jeden aktuellen Prozeßzustand berechnet wird, ob er sich im Kanal, am Rande oder außerhalb des Referenzkanals befindet. Diese Berechnung wird gemacht, indem für das aktuelle Gewinnerneuron die dazugehörige Gewinnerrate bestimmt wird. Ist die Gewinnerrate hoch, befindet sich das Neuron -und damit der aktuelle Prozeßzustand- im Referenzkanal, ist die Gewinnerrate niedrig oder NULL, ist der aktuelle Zustand außerhalb des Kanals. Damit kann automatisch ein Fehler detektiert werden. **Fig. 5** verdeutlicht das an einem Beispiel. Zustand 1 ist ein Gutzustand und Zustand 2 ein vom Gut-Zustand abweichender Prozeßzustand, da sich das dazugehörige Neuron außerhalb des Kanals befindet. Die Gewinnerrate für das Neuron im Zustand 2 ist Null. Für Zustand 2 kann das SOM-System damit automatisch eine Fehlermeldung generieren.

Ist eine Abweichung erkannt, kann man mit Hilfe des Verfahrenschrittes 4 eine automatische Fehlerkorrektur oder Optimierung des Prozesses durchführen.

Gesamtverfahren

Durch Anwendung dieses Verfahren, das *echtzeitfähig* ist, wird einem Prozeßbediener die Möglichkeit gegeben, selbst hochkomplexe dynamische Prozesse intuitiv zu erfassen und -sehr einfach verstehbar- zu optimieren.
Ein weiterer Vorteil des Verfahrens liegt in dem geringen Engineering-Aufwand. Da das Lernen und Strukturieren der Karten und auch der Aufbau eines Referenzkanals vollständig durch das Verfahren erbracht wird, entfällt aufwendiges Engineering von Referenzmodellen der Anlage. Denn der Referenzkanal entspricht einem Referenzmodell für die Gut-Zustände einer Anlage einschließlich einstellbarem Toleranzband. Diese Form des Engineering ist integraler Bestandteil des Verfahrens selbst.

**Patentansprüche**

1. Verfahren zur Steuerung von Prozeßvorgängen einer technischen Anlage, bei dem alle für einen Prozeß relevanten Größen zusammengefaßt und durch eine neuronale Analyse auf der Grundlage sebstorganisierender, neuronaler Karten (sog. SOM) in Beziehung zueinander ausgewertet werden, indem eine topologieerhaltende, nichtlineare Projektion von Daten der relevanten Prozeßgrößen auf eine mehrdimensionale SOM realisiert wird.

2. Verfahren nach Anspruch 1, dadurch gekennzeichnet, daß die technische Anlage eine Kraftwerksanlage oder ein Teil einer solchen Anlage ist.

3. Verfahren nach einem der vorstehenden Ansprüche, dadurch gekennzeichnet, daß eine Trajektorie von Prozeßvorgängen ($K_u$) dargestellt wird durch eine graphische Verbindung von visualisierten Prozeßzuständen (M, M+1) und daß zur Beurteilung dieser Folgen von Prozeßzuständen auf der Karte sog. Referenzkanäle (RK) mit einstellbarer Toleranzbreite aufgenommen und dargestellt werden.

4. Verfahren nach Anspruch 3, dadurch gekennzeichnet, daß ein sog. Prozeßlenker (PL) aufgeschaltet werden kann, mit dessen Hilfe sich der Prozeß durch einen Referenzkanal (RK) steuern läßt.

5. Verfahren nach Anspruch 3, dadurch gekennzeichnet, daß das Verlassen des Referenzkanals (RK) durch eine Trajektorie ($K_u$) auf der Karte automatisch erkannt wird, indem zur Beurteilung des aktuellen Zustands die Gewinnerrate des ihn repräsentierenden Neurons ausgewertet wird und der Prozeß in Abhängigkeit vom Ergebnis der Auswertung zurück in den Referenzkanal gebracht wird.

6. Verfahren nach einem der vorstehenden Ansprüche, dadurch gekennzeichnet, daß seine Durchführung in nachstehenden Schritten erfolgt:

   a) Aufnahme und Auswahl der Prozeßgrößen und Aufbereitung der Daten,
   b) Entfaltung des selbstorganisierenden, neuronalen Netzes im Zustandsraum der Anlage, basierend auf einem selbstorganisierenden, neuronalen Algorithmus, wobei die Prozeßwerte der relevanten Prozeßgrößen verwendet werden,
   c) Darstellung des entfalteten Netzes als neuronale Karte,
   d) Projektion der durch n Prozeßgrößen bestimmten Anlagenzustände auf die neuronale Karte, basierend auf sogenannten winner-takes-all und/oder winner-takes-most Algorithmen zur Erzeugung eines Referenzkanals von zulässigen Prozeßvorgängen,
   e) Anbindung der so vorbereiteten Karte an den Prozeß zur Aufzeichnung der zu untersuchenden Prozeßvorgänge durch Darstellung einer Trajektorie auf der Karte und anschließende Überwachung, ob die Trajektorie im Referenzkanal verläuft oder diesen verläßt,
   f) Aufschaltung eines Prozeßlenkers mit dem der Prozeß beliebig über die Karte und damit real in dessen Zustandsraum gesteuert werden kann.

**Prozeß-Lenker**

Steuerungssystem /
Selbstorganisierende
Karte (SOM)

Prozeßbeobachter
und Bediener

Neuro-Analyse-System

n Prozeßgrößen

Datenanalyse-System
(Auswahl und Korrelator)

Daten-Server

Prozeß

Fig. 1

Fig. 2

Fig. 3

Fig. 4

Fig. 5

Europäisches
Patentamt

**EUROPÄISCHER RECHERCHENBERICHT**

Nummer der Anmeldung

EP 98 11 1786

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | SYED A ET AL: "REAL-TIME MONITORING AND DIAGNOSING OF ROBOTIC ASSEMBLY WITH SELF-ORGANIZING NEURAL MAPS" PROCEEDINGS OF THE INTERNATIONAL CONFERENCE ON ROBOTICS AND AUTOMAT, ATLANTA, MAY 2 - 6, 1993, Bd. 2, Nr. CONF. 10, 2. Mai 1993, Seiten 188-195, XP000402656 INSTITUTE OF ELECTRICAL AND ELECTRONICS ENGINEERS | 1 | G06F15/80 |
| Y | * Seite 188, linke Spalte, Zeile 1 - Seite 193, linke Spalte, Zeile 12; Abbildungen 1-8 * | 2,3,6 | |
| A | | 4,5 | |
| | --- | | |
| Y | BARTAL Y ET AL: "NUCLEAR POWER PLANTS TRANSIENT DIAGNOSTICS USING LVQ OR SOME NETWORKS DON'T KNOW THAT THEY DON'T KNOW" INTERNATIONAL CONFERENCE ON NEURAL NETWORKS/ WORLD CONGRESS ON COMPUTATIONAL INTELLIGENCE, ORLANDO, JUNE 27 - 29, 1994, Bd. 6, 27. Juni 1994, Seiten 3744-3749, XP000510508 INSTITUTE OF ELECTRICAL AND ELECTRONICS ENGINEERS * Zusammenfassung * | 2 | |

**RECHERCHIERTE SACHGEBIETE (Int.Cl.6)**

G06F

-/--

Der vorliegende Recherchenbericht wurde für alle Patentansprüche erstellt

| Recherchenort | Abschlußdatum der Recherche | Prüfer |
|---|---|---|
| DEN HAAG | 19. November 1998 | Schenkels, P |

EPO FORM 1503 03.82 (P04C03)

# EP 0 897 155 A1

Europäisches
Patentamt

**EUROPÄISCHER RECHERCHENBERICHT**

Nummer der Anmeldung

EP 98 11 1786

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y | KEYMEULEN D ET AL: "On the self-organizing properties of topological maps" TOWARD A PRACTICE OF AUTONOMOUS SYSTEMS. PROCEEDINGS OF THE FIRST EUROPEAN CONFERENCE ON ARTIFICIAL LIFE, PARIS, FRANCE, 11-13 DEC. 1991, Seiten 64-69, XP002085067 ISBN 0-262-72019-1, 1992, Cambridge, MA, USA, MIT Press, USA | 3,6 | |
| A | * Seite 64, linke Spalte, Zeile 1 - Seite 65, linke Spalte, Zeile 19 * * Seite 67, rechte Spalte, Zeile 17 - Seite 69, linke Spalte, Zeile 14; Abbildung 2 * --- | 1,2,4,5 | |
| A | GB 2 277 151 A (UNIV BRUNEL) 19. Oktober 1994 * Seite 1, Zeile 1 - Seite 2, Zeile 24 * --- | 1-6 | |
| A | HYOTYNIEMI H: "State-space modeling using self-organizing maps" 5TH EUROPEAN SYMPOSIUM ON ARTIFICIAL NEURAL NETWORKS ESANN '97. PROCEEDINGS, PROCEEDINGS OF EUROPEAN SYMPOSIUM ON ARTIFICIAL NEURAL NETWORKS. ESANN '97, BRUGES, BELGIUM, 16-18 APRIL 1997, Seiten 187-192, XP002085068 ISBN 2-9600049-7-3, 1997, Brussels, Belgium, D facto, Belgium * Seite 187, Zeile 1 - Seite 191, Zeile 18; Abbildungen 1-6 * ----- | 1-6 | **RECHERCHIERTE SACHGEBIETE (Int.Cl.6)** |

Der vorliegende Recherchenbericht wurde für alle Patentansprüche erstellt

| Recherchenort | Abschlußdatum der Recherche | Prüfer |
|---|---|---|
| DEN HAAG | 19. November 1998 | Schenkels, P |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes
  Dokument